# EUROPÄISCHE PATENTSCHRIFT

(11) **EP 3 532 280 B1**
(45) Veröffentlichungstag und Bekanntmachung des Hinweises auf die Patenterteilung: **08.07.2020**
(21) Anmeldenummer: 17794907.0
(22) Anmeldetag: 19.10.2017
(51) Int. Cl.: B32B 7/12, B32B 15/14, B32B 15/20, B32B 3/02, B32B 3/06, B32B 3/26, B32B 3/30, B32B 3/28

(54) **MEHRSCHICHTIGES STRUKTURBAUTEIL, VERFAHREN ZU DESSEN HERSTELLUNG UND VERWENDUNGEN DAFÜR**
MULTILAYER STRUCTURAL COMPONENT, METHOD FOR PRODUCING THE SAME AND USE THEREOF
COMPOSANT STRUCTURÉ MULTICOUCHES, SON PROCÉDÉ DE FABRICATION ET D'UTILISATION

(30) Priorität: 25.10.2016 DE 102016012691
(43) Veröffentlichungstag der Anmeldung: 04.09.2019
(73) Patentinhaber: Hydro Aluminium Rolled Products GmbH, 41515 Grevenbroich (DE); Röchling Automotive SE & Co. KG, 68165 Mannheim (DE)
(72) Erfinder: DENKMANN, Volker, 47906 Kempen (DE); SIEMEN, Andreas, 41363 Jüchen (DE); UHL, Frank, 55234 Ober-Flörsheim (DE)
(74) Vertreter: Cohausz & Florack
(86) Internationale Anmeldenummer: PCT/EP2017/076662
(87) Internationale Veröffentlichungsnummer: WO 2018/077710

(56) Entgegenhaltungen:
- EP-A1- 0 983 141
- EP-B1- 2 965 902
- DE-A1-102005 029 729
- DE-A1-102014 218 379
- JP-U- H0 539 939

## Beschreibung

Die Erfindung betrifft ein mehrschichtiges Strukturbauteil mit einer Schichtstruktur umfassend eine Mehrzahl von in einer Stapelrichtung übereinander angeordneter Schichten, wobei die Schichtstruktur mindestens eine Faserschicht aus einem Fasermaterial und einem thermoplastischen Bindemittel und mindestens eine Aluminiumschicht aus Aluminium oder einer Aluminiumlegierung umfasst. Die Erfindung betrifft weiterhin ein Verfahren zur Herstellung eines solchen Strukturbauteils sowie Verwendungen für ein solches Strukturbauteil.

Insbesondere im Bereich der Konstruktion und Herstellung von Fahrzeugkarosserien sind verschiedene technische Anforderungen und Vorgaben zu erfüllen, die bei der Auswahl der Werkstoffe für die Karosserie berücksichtigt werden müssen. Beispielsweise erfordert die Konstruktion eines Unterbodenbereichs für ein Kraftfahrzeug eine Optimierung hinsichtlich der Geräuschentwicklung, des Luftwiderstandbeiwertes, der Stabilität und des Crash-Verhaltens. Weiterhin sollen die eingesetzten Werkstoffe und Bauteile auch ein möglichst geringes Gewicht aufweisen, um dadurch beispielsweise einen optimierten Kraftstoffverbrauch erreichen zu können.

Im Stand der Technik werden für Unterbodenbereiche von Kraftfahrzeugen beispielsweise Verkleidungen eingesetzt, die aus einem einfachen einteiligen Aufbau aus Polypropylen mit Glasfaserfüllung bestehen, um auf diese Weise eine gute Schallisolation und einen verbesserten Luftwiderstandsbeiwert c_{w} zu erreichen. Hierzu werden im Stand der Technik beispielsweise folgende Werkstoffe eingesetzt: langfaserverstärkte Thermoplaste (LFT), glasmattenverstärkte Thermoplaste (GMT) oder LWRT-Werkstoffe.

Diese Verkleidungen werden zusammen mit Formblechkonstruktionen verwendet, die den eigentlichen Unterboden des Kraftfahrzeugs bilden und die notwendige Steifigkeit, ein ausreichend gutes Crash-Verhalten und die konstruktiven Anbindungspunkte an die übrige Karosserie-Rahmenkonstruktion zur Verfügung stellen. Derartige Bodenkonstruktionen werden in zusätzlichen Arbeitsschritten zum Innenraum hin ergänzt durch mehrere Materialschichten mit akustischen, optischen und haptischen Funktionen.

Diese kombinierten Systeme aus Faserverbund-Verkleidung, Formblechkonstruktion und zusätzlichen Bodenschichten erfordern jedoch einen nicht unerheblichen Montageaufwand. Weiterhin sind viele dieser Systeme aufgrund der verhältnismäßig schweren Formblechkonstruktionen auch hinsichtlich ihres Gewichts optimierungsbedürftig.

Aus der EP 2 965 902 B1 ist ein mehrschichtiges Strukturbauteil mit einer Schichtstruktur umfassend eine Mehrzahl von in einer Stapelrichtung übereinander angeordneter Schichten bekannt, wobei die Schichtstruktur mindestens eine Faserschicht aus einem Fasermaterial und einem thermoplastischen Bindemittel und mindestens eine Aluminiumschicht aus Aluminium oder einer Aluminiumlegierung umfasst und wobei das Strukturbauteil ein zwischen zwei Schichten eingebettetes, teilweise aus der Schichtstruktur ragendes Anschlusselement zum Verbinden des Strukturbauteils mit einem weiteren Bauteil aufweist. Dadurch wird ein Bauteil zur Verfügung gestellt, das bei relativ geringem Gewicht gute mechanische Eigenschaften wie Biege-, Torsions- und Drucksteifigkeit aufweist und sich auf einfache Weise mit einem weiteren Bauteil verbinden lässt.

Derartige Strukturbauteile werden zum Beispiel im Fahrzeug-Unterbodenbereich eingesetzt. Um die Steifigkeit dieser Strukturbauteile bzgl. Biegung, Torsion und Druck sowie des Crashverhaltens zu optimieren, werden kraftaufnehmende Tragwerkskonstruktionen aus Aluminium in die Bauteile integriert.

Diese Tragwerkskonstruktionen erfüllen zwar die Forderung zur Erhöhung der Steifigkeit, sind jedoch recht aufwändig in separaten Arbeitsschritten herzustellen. Es müssen verschiedene Profilgeometrien hergestellt, abgelängt, verschweißt, stückvorbhandelt und stückhaftlackiert werden, bevor sie zusammen mit Fasermatten und Metallzwischenlagen zu einem fertigen multifunktionalen Strukturbauteil verarbeitet werden können.

Aufgrund dieses aufwändigen Herstellungsprozesses sind die Kosten für die Herstellung derartiger Strukturbauteile sehr hoch.

Weiter offenbart die CN 105855383 A ein Herstellungsverfahren für ein mehrschichtiges Strukturbauteil mit einer Schichtstruktur umfassend zwei in einer Stapelrichtung übereinander angeordneter Schichten, wobei die Schichtstruktur eine Faserschicht aus Kohlenstofffasern und eine Aluminiumschicht umfasst. Zur Befestigung der Kohlenstofffaserschicht an der Aluminiumschicht werden Nietenartige Ausstülpungen in die Aluminiumschicht eingestanzt, deren Ränder nach Auflegen der Kohlenstofffaserschicht umgebogen werden.

Vor diesem Hintergrund liegt der vorliegenden Erfindung die Aufgabe zu Grunde, ein kostengünstigeres Strukturbauteil, ein kostengünstigeres Verfahren zu dessen Herstellung sowie eine Verwendung für das Strukturbauteil zur Verfügung zu stellen.

Diese Aufgabe wird bei einem mehrschichtigen Strukturbauteil mit einer Schichtstruktur umfassend eine Mehrzahl von in einer Stapelrichtung übereinander angeordneter Schichten, wobei die Schichtstruktur mindestens eine Faserschicht aus einem Fasermaterial und einem thermoplastischen Bindemittel und mindestens eine Aluminiumschicht aus Aluminium oder einer Aluminiumlegierung umfasst, erfindungsgemäß dadurch gelöst, dass mindestens eine Aluminiumschicht der Schichtstruktur eine Versteifungsstruktur aufweist, wobei die Versteifungsstruktur als Bördelkante (auch als Bördelrand bezeichnet) ausgebildet ist.

Im Rahmen der Erfindung wurde erkannt, dass sich gattungsgemäße Strukturbauteile, die zur Verbesserung der mechanischen Eigenschaften bisher mit Profil- und Tragwerkskonstruktionen verstärkt werden mussten, einfacher und kostengünstiger durch die Verwendung von einer oder mehreren Aluminiumschichten mit

Bördelkanten herstellen lassen.

Auf diese Weise können anstelle von Profil- und Tragwerkskonstruktionen insbesondere entsprechend gebördelte Aluminiumbleche, vorzugsweise gebördelte Aluminiumstanzbleche für die eine oder mehreren Aluminiumlagen des Strukturbauteils eingesetzt werden, die sich kostengünstig und einfach herstellen lassen. Die Aluminiumbleche sind vorzugsweise vorlackiert, beispielsweise mittels eines Coil-Coating-Verfahrens. Durch die Einbettung der Aluminiumbleche in die Schichtstruktur des Strukturbauteils wird zudem eine flächige und damit bessere Anbindung des streifigkeitserhöhenden Blechs an die übrigen Komponenten des Strukturbauteils erreicht.

Dieses Verfahren eignet sich insbesondere für den Automobilbau, bei dem beispielsweise für die Karosserie auch andere Umformteile mit Ausstanzungen zum Einsatz kommen, um leichte und steife Karosseriebauteile zu erzeugen. Die Verfahrenstechnik des Bördelns ist daher im Automobilbau bereits im Einsatz, so dass sich das vorliegend beschriebene Verfahren gut in die bestehende Herstellungsweise integrieren lässt.

Für die eine oder mehreren Aluminiumlagen werden vorzugsweise vorlackierte, geklebte und/oder geschweißte Formteile aus Aluminiumblech verwendet.

Die Schichtstruktur umfasst eine Mehrzahl von in einer Stapelrichtung übereinander angeordneten Schichten, wobei die Schichtstruktur mindestens eine Faserschicht aus einem Fasermaterial und einem thermoplastischen Bindemittel und mindestens eine Aluminiumschicht aus Aluminium oder einer Aluminiumlegierung umfasst. Die Schichtstruktur kann grundsätzlich eine beliebige Anzahl übereinander angeordneter Schichten umfassen. Vorzugsweise weist die Schichtstruktur jedoch zumindest zwei Faserschichten und mindestens zwei Aluminiumschichten auf.

Die einzelnen Schichten der Schichtstruktur sind vorzugsweise fest und insbesondere flächig untereinander verbunden, so dass sie ein fest zusammenhängendes Strukturbauteil bilden. Vorzugsweise sind die Schichten stoffschlüssig miteinander verbunden.

Die Schichtstruktur weist in Stapelrichtung vorzugsweise einen symmetrischen Aufbau auf. Durch einen symmetrischen Aufbau der Schichtstruktur kann verhindert werden, dass sich das Strukturbauteil beispielsweise bei Temperaturänderungen verzieht.

Mindestens eine Aluminiumschicht der Schichtstruktur weist eine Bördelkante und optional gegebenenfalls auch eine Versteifungssicke und/oder einen Hohlraum und/oder eine Ausnehmung auf. Die Schichtstruktur kann natürlich auch mehrere Aluminiumschichten mit einer Versteifungsstruktur und/oder einer Ausnehmung aufweisen.

Durch das Vorsehen von Bördelungen und optional gegebenenfalls auch Versteifungssicken und/oder Hohlräumen wird die Steifigkeit der einen oder mehreren Aluminiumschichten verbessert, wodurch sich hohe Biege-, Torsions- und Drucksteifigkeiten erreichen lassen. Auch das Crashverhalten derartiger Strukturbauteile hat sich als gut herausgestellt. Vorzugsweise weist die Aluminiumschicht mehrere Versteifungsstrukturen, insbesondere mehrere Bördelkanten, und optional gegebenenfalls auch mehrere Versteifungssicken und/oder mehrere Hohlräume auf, um den Effekt der Versteifung zu erhöhen. Die Anzahl, die Anordnung und/oder die Ausrichtung der Bördelkanten, Versteifungssicken bzw. Hohlräume werden vorzugsweise an den geplanten Einsatzzweck des Strukturbauteils angepasst.

Unter einer Versteifungssicke wird eine Sicke im Material verstanden, die dazu eingebracht ist, um die Steifigkeit, insbesondere die Biege-, Torsions- und Drucksteifigkeit der Aluminiumschicht (bzw. des dafür eingesetzten Aluminiumblechs) und damit des daraus herzustellenden Strukturbauteils zu erhöhen. Eine solche Versteifungssicke weist insbesondere eine Erstreckungsrichtung auf, deren Länge größer, vorzugsweise um ein Vielfaches größer ist als die Breite der Versteifungssicke. Vorzugsweise beträgt die Breite der Versteifungssicke mindestens 1 cm, insbesondere mindestens 3 cm. Die Länge der Versteifungssicke ist vorzugsweise mindestens doppelt so groß, insbesondere mindestens fünfmal so groß wie die Breite der Versteifungssicke.

Unter einer Ausnehmung wird eine Aussparung in der Aluminiumschicht bzw. im Aluminiumblech verstanden. Vorzugsweise handelt es sich bei der Ausnehmung um eine Ausstanzung, die durch Ausstanzen hergestellt wurde.

Von Versteifungssicken zu unterscheiden sind andere Umformungen der Aluminiumschicht wie zum Beispiel Kalottierungen, die z.B. als Materialreservoir zur Verbesserung der Umformbarkeit dienen, jedoch keine Erhöhung der Steifigkeit bewirken.

Durch das Vorsehen von Ausnehmungen lässt sich das Gewicht des Strukturbauteils reduzieren. Es hat sich herausgestellt, dass die Steifigkeitsanforderungen an derartige Strukturbauteile es häufig nicht erfordern, dass die Aluminiumschicht bzw. -schichten durchgängig sind. Vielmehr können insbesondere an weniger belasteten Stellen Ausnehmungen vorgesehen werden, die das Gewicht reduzieren.

Gleichzeitig weisen die vorliegend beschriebenen Strukturbauteile wegen ihrer Materialien und ihres Aufbaus eine gute Korrosionsstabilität auf.

Die oben genannte Aufgabe wird erfindungsgemäß weiterhin durch ein Verfahren zur Herstellung eines solchen Strukturbauteils gelöst, bei dem die Schichten der Schichtstruktur in einem Formwerkzeug in Stapelrichtung übereinander angeordnet werden und bei dem die Schichten zu einem Strukturbauteil heißverpresst werden.

Unter dem Heißverpressen wird verstanden, dass die Schichten der Schichtstruktur vor oder beim Verpressen derart erwärmt werden, dass das thermoplastische Bindemittel der Faserschichten erweicht. Auf diese Weise werden die Schichten der Schichtstruktur zusammengefügt, so dass sie nach dem Aushärten des Bindemittels fest miteinander verbunden sind und ein zusammenhängendes Strukturbauteil bilden. Das Heissverpressen erfolgt vorzugsweise in einem Temperaturbereich von 170°C bis 230°C. Der Schichtaufbau wird vorzugsweise im Wesentlichen vollflächig verpresst.

Bei dem Verfahren wird für mindestens eine Aluminiumschicht der Schichtstruktur ein Aluminiumblech mit einer Bördelkante und optional gegebenenfalls auch einer Versteifungssicke und/oder einer Ausnehmung in dem Formwerkzeug angeordnet. Für mindestens eine Aluminiumschicht der Schichtstruktur kann auch eine Aluminiumblechstruktur mit mehreren gefügten Aluminiumblechen in dem Formwerkzeug angeordnet werden, wobei zumindest ein Aluminiumblech der Aluminiumblechstruktur eine Versteifungsstruktur und/oder eine Ausnehmung aufweist oder wobei zwischen zwei Aluminiumblechen der Aluminiumblechstruktur ein Hohlraum vorgesehen ist.

Die zuvor genannte Aufgabe wird erfindungsgemäß weiterhin gelöst durch die Verwendung des zuvor beschriebenen Strukturbauteils als Bauelement im Automobilbau, im Schienenfahrzeugbau, im Schiffsbau, im Maschinenbau, im Flugzeugbau oder im Baubereich.

Im Automobilbau können die zuvor beschriebenen Strukturbauteile beispielsweise als Bodenplatte oder Stirnwand eingesetzt werden, sowie als Schottwände, Ladeböden und Dachaufbauten. Insbesondere können in die Strukturbauteile hierzu auch Querträger integriert werden, z.B. zur Installation von Sitzschienen. Weist das herzustellende Fahrzeug keinen Tunnelbereich auf, können die als Untermodul verwendeten Strukturbauteile sehr flach ausgebildet werden. Bei Fahrzeugen mit einem Tunnelbereich kann ein Tunnel aus Kunststoff an zwei Halbmodulen angeschlossen werden, wobei die Halbmodule aus einem Strukturbauteil bestehen.

Im Bereich des Schienenverkehrs können die Strukturbauteile insbesondere als Bodenplatte, oder für Wand- und Dachkonstruktionen von Schienenfahrzeugen eingesetzt werden. Im Flugzeugbau und Schiffbau können die Strukturbauteile ebenfalls für Boden-, oder Wand- und Dachkonstruktionen verwendet werden.

Im Maschinenbau können die Strukturbauteile insbesondere als bzw. für Maschineneinhausungen zur Lärmreduzierung eingesetzt werden.

Im Baubereich können die Strukturbauteile beispielsweise als Elemente für den Hochwasserschutz, als dekorative Wandelemente oder für Lärmschutzwände eingesetzt werden.

Vorzugsweise ist das Strukturbauteil für eine der zuvor genannten Verwendungen ausgebildet. Beispielsweise kann das Strukturbauteil als Kraftfahrzeugunterboden bzw. als ein Teil davon ausgebildet sein.

Im Folgenden werden mehrere Ausführungsformen des Strukturbauteils sowie des Verfahrens zu dessen Herstellung beschrieben, wobei die einzelnen Ausführungsformen jeweils sowohl für das Strukturbauteil als auch für das Verfahren zu dessen Herstellung gelten. Weiterhin können die Ausführungsformen untereinander kombiniert werden.

Bei einer Ausführungsform des Strukturbauteils ist die Versteifungsstruktur (insbesondere die Bördelkante, die Versteifungssicke und/oder der Hohlraum) bzw. die Aussparung der Aluminiumschicht zwischen zwei Faserschichten eingebettet. Die Versteifungsstruktur (insbesondere die Bördelkante, die Versteifungssicke bzw. der Hohlraum) und/oder die Ausnehmung sind also im Strukturbauteil innenliegend angeordnet. Insbesondere handelt es sich bei der betreffenden Aluminiumschicht um eine innenliegende Schicht, die zwischen zwei Faserschichten angeordnet ist. Bei einer entsprechenden Ausführungsform des Verfahrens wird das die Versteifungsstruktur (insbesondere die Bördelkante, die Versteifungssicke und/oder den Hohlraum) bzw. das die Aussparung aufweisende Aluminiumblech bzw. die mehrlagige Aluminiumblechstruktur derart zwischen zwei Faserschichten eingebettet, dass die Versteifungsstruktur bzw. der Hohlraum zwischen den Faserschichten eingebettet ist. Auf diese Weise wird eine Innenversteifung des Strukturbauteils erreicht.

Bei einer Ausführungsform des Verfahrens werden das Aluminiumblech bzw. die Aluminiumbleche für die Aluminiumschicht durch Stanzen und/oder Umformen eines Aluminiumblechs oder Aluminiumbands, insbesondere eines beschichteten Aluminiumblechs oder Aluminiumbands hergestellt. Bei einer entsprechenden Ausführungsform des Strukturbauteils weist die die Versteifungsstruktur (insbesondere die die Bördelkante bzw. die Versteifungssicke) aufweisende Aluminiumschicht bzw. die die Ausnehmung aufweisende Aluminiumschicht ein gestanztes und/oder umgeformtes Aluminiumblech, insbesondere ein gebördeltes Aluminiumstanzblech, auf. Es wurde festgestellt, dass sich die zur Versteifung des Strukturbauteils verwendeten Aluminiumbleche mit Bördelkante und optional gegebenenfalls auch mit Versteifungssicke bzw. Ausnehmung einfach und kostengünstig durch Stanzen und/oder Umformen aus einem Aluminiumblech oder sogar direkt aus dem Aluminiumband herstellen lassen. Gegenüber dem Herstellen aufwändiger Tragwerkskonstruktionen wird dadurch eine sehr wirtschaftliche Herstellung erreicht.

Bei einer weiteren Ausführungsform weist die den Hohlraum aufweisende Aluminiumschicht zwei übereinander angeordnete, gefügte Aluminiumbleche auf, zwischen denen der Hohlraum gebildet ist. Die Aluminiumschicht wird bei dieser Ausführungsform also durch eine mehrlagige Aluminiumblechstruktur gebildet. Bei einer entsprechenden Ausführungsform des Verfahrens werden für eine Aluminiumschicht der Schichtstruktur zwei übereinander angeordnete, gefügte Aluminiumbleche in dem Formwerkzeug angeordnet, wobei zwischen den beiden Aluminiumblechen ein Hohlraum gebildet ist. Die einzelnen Aluminiumbleche können insbesondere lokale Halbschalprofile ausbilden, zwischen denen sich beim Fügen der Aluminiumbleche der entsprechende Hohlraum ergibt. Vorzugsweise sind die Aluminiumbleche gestanzt und/oder umgeformt, so dass sich zwischen diesen ein Hohlraum ausbildet. Die Aluminiumbleche können beispielsweise durch Schweißen oder Kleben miteinander gefügt werden. Durch das Fügen zweier gestanzter bzw. umgeformter Aluminiumbleche lassen sich der oder die Hohlräume einfach und kostengünstig herstellen. Gleichzeitig wird durch das Vorsehen derartiger Hohlräume eine sehr gute Steifigkeit erreicht. Auf diese Weise lassen sich durch innerhalb des Strukturbauteils auch geschlossene Profilquerschnitte darstellen.

Anstelle einer Schweiß- oder Klebeverbindung der beiden Aluminiumbleche ist es auch möglich, teilflächige Faserschichten zwischen den Aluminiumblechen anzuordnen, so dass sich diese beim Heißpressen verbinden. Durch die nur teilflächige Faserschicht bilden sich dann zwischen den beiden Aluminiumblechen Hohlräume aus.

Bei einer weiteren Ausführungsform verläuft der Hohlraum der Aluminiumschicht zwischen zwei Öffnungen, so dass eine Leitung durch den Hohlraum hindurchführbar ist, insbesondere eine Energie-, Medien- oder Signalleitung. Vorzugsweise ist eine Leitung, insbesondere eine Energie-, Medien- oder Signalleitung von der einen zur anderen Öffnung durch den Hohlraum geführt. Beispielsweise kann der Hohlraum im Wesentlichen gerade zwischen einer ersten und einer zweiten Öffnung verlaufen, so dass sich ein Kanal ergibt, durch den eine Leitung geführt werden kann. Auf diese Weise kann das Strukturbauteil auch für eine verdeckte Leitungsführung verwendet werden, wobei die Leitung zudem durch die Steifigkeit des Strukturbauteils geschützt wird.

Bei einer weiteren Ausführungsform weist die die Versteifungsstruktur bzw. die die Ausnehmung aufweisende Aluminiumschicht eine Dicke im Bereich von 200 bis 2000 µm auf. Durch die Untergrenze von 200 µm wird eine ausreichende Steifigkeit der Aluminiumschicht erreicht. Dünnere Aluminiumschichten mit ähnlichen Verformungen führen (wenn überhaupt) nur zu einer geringen Steifigkeitserhöhung. Durch die Obergrenze von 2000 µm werden die Herstellbarkeit und die Verarbeitbarkeit der Strukturbauteile verbessert.

Eine Aluminiumschicht des Strukturbauteils kann seitlich über die Faserschichten herausragen, um das Strukturbauteil an eine Rahmenkonstruktion, beispielsweise eines Kraftfahrzeugs, anbinden zu können.

Weiterhin kann eine Anbindbarkeit des Verbundbauteils an eine solche Rahmenkonstruktion bei einer weiteren Ausführungsform dadurch erreicht, dass das Strukturbauteil ein Anschlusselement aus Metall umfasst, wobei das Anschlusselement einen Verankerungsbereich aufweist, der zwischen zwei in Stapelrichtung benachbarten Schichten der Schichtstruktur eingebettet ist, insbesondere zwischen zwei Faserschichten, und wobei das Anschlusselement einen zumindest teilweise außerhalb der Schichtstruktur angeordneten Anschlussbereich zum Verbinden des Strukturbauteils mit einem weiteren Bauteil aufweist.

Bei einer weiteren Ausführungsform ist die mindestens eine Aluminiumschicht der Schichtstruktur mit einer Haftvermittlerschicht versehen, insbesondere mit einem PP-, PA- oder Polyester-Haftvermittler. Auf diese Weise wird die Verbindung zwischen der Aluminiumschicht und der Kunststofffaserverbundschicht verbessert bzw. verstärkt.

Zur Herstellung des Strukturbauteils wird vorzugsweise ein beschichtetes Aluminiumblech oder -band verwendet, insbesondere ein mit der zuvor beschriebenen Haftvermittlerschicht beschichtetes Aluminiumblech oder -band. Die Beschichtung erfolgt vorzugsweise mittels eines Bandbeschichtungs-(Coil-Coating-)Verfahrens, kann aber beispielweise auch durch Tauchen oder Spritzlackieren mit anschließender Trocknung erfolgen.

Durch die Verwendung eines beschichteten Aluminiumbands, insbesondere eines bandbeschichteten Aluminiumbands, wird eine kostengünstigere Fertigung erreicht als bei der Verwendung von Tragwerkskonstruktionen, die stückbeschichtet werden müssen.

Bei einer weiteren Ausführungsform weist die mindestens eine Faserschicht jeweils wenigstens abschnittsweise eine Porosität von wenigstens 75 % auf. Unter der Porosität eines Materials das Verhältnis aus dem Hohlraumvolumen zu dem Gesamtvolumen des Materials verstanden. Neben dem geringen Gewicht liegt ein Vorteil der Porosität der Faserschichten darin, dass diese geräuschisolierend wirken, so dass auf eine zusätzliche Schallisolierung des Strukturbauteils verzichtet werden kann.

Bei der Herstellung des Strukturbauteils, insbesondere mit dem zuvor beschriebenen Verfahren, werden die einzelnen Schichten der Schichtanordnung üblicherweise heißverpresst

Beim Heißverpressen kann das Strukturbauteil abschnittweise kompaktiert werden, wobei in den kompaktierten oder teilkompaktierten Abschnitten die Porosität der Faserschichten auch kleiner als 75 Prozent sein kann, solange die Faserschichten in dem fertig hergestellten Strukturbauteil wenigstens abschnittsweise, vorzugsweise vorwiegend, eine Porosität von wenigstens 75 Prozent aufweisen.

Beispielsweise kann bei einer Faserschicht mit einem Flächengewicht von etwa 500g/m² und mit einem Glasfaser-Anteil von etwa 40 Massenprozent sowie einem Polypropylen-Anteil von etwa 60 Massenprozent als thermoplastisches Bindemittel bei einer Verpressung der Faserschicht auf eine Dicke von etwa 0,4 mm eine (in den jeweiligen kompaktierten Abschnitten) vollständige Kompaktierung (Porosität etwa Null) erreicht werden, bei einer Verpressung auf 0,8 mm eine Porosität von etwa 50 Prozent, bei einer Verpressung auf 1,6 mm eine Porosität von etwa 75 Prozent und bei einer Verpressung auf 3,2 mm eine Porosität von etwa 87,5 Prozent.

Aus Gründen der Geräuschisolation und des Gewichts ist bevorzugt, dass wenigstens eine Faserschicht wenigstens abschnittsweise, vorzugsweise vorwiegend oder vollständig eine Porosität zwischen 85 % und 95 % aufweist, wobei vorzugsweise mehrere oder alle Faserschichten wenigstens abschnittsweise die vorgenannte Porosität haben.

Um die geräuschisolierende Eigenschaften der Faserschicht besser ausnutzen zu können, kann vorgesehen sein, dass wenigstens eine Aluminiumschicht, die in der Stapelrichtung am weitesten außen liegt, eine Mikroperforation aufweist. Bevorzugt weisen beide in der Stapelrichtung am weitesten außen liegende Aluminiumschichten eine solche Mikroperforation auf. Auf diese Weise können Schallwellen durch die mikroperforierte Aluminiumschicht in die benachbarte Faserschicht geleitet werden, wo sie dann stark absorbiert werden.

Vorzugsweise ist eine mittlere Aluminiumschicht der Schichtstruktur, d.h. eine nicht am weitesten außen liegende Aluminiumschicht, als geschlossene Schicht ausgebildet, um eine Wasserdichtigkeit des Strukturbauteils zu gewährleisten. Eine solche Schicht weist insbesondere keine Mikroperforation auf.

Bei einer weiteren Ausführungsform umfasst die Schichtstruktur neben Aluminiumschichten und Faserschichten noch eine oder mehrere Schichten aus anderen Materialien und/oder mit einer anderen Struktur, insbesondere als äußere Schicht (Deckschicht). Auf diese Weise können die Eigenschaften des Strukturbauteils insbesondere an der Oberfläche bedarfsgemäß eingestellt werden.

Beispielsweise kann die Schichtstruktur eine Deckschicht aus einem porösen Material aufweisen, wie zum Beispiel ein Faservlies oder eine Schaum-Matte, die fest mit wenigstens einer der übrigen Schichten der Schichtstruktur verbunden ist. Die Schichtstruktur kann insbesondere eine Deckschicht aus textilem Material, beispielsweise in der Art eines Teppichbodens aufweisen.

Ist das Strukturbauteil als Kraftfahrzeugboden ausgebildet, so können beispielsweise auf einer im eingebauten Zustand der Fahrbahn zugewandten Außenseite des Strukturbauteils ein steinschlagresistentes Vliesmaterial und auf der dem Fahrgastinnenraum zugewandten Außenseite ein Teppich oder eine Dekorschicht vorgesehen sein. Auf diese Weise wird ein Strukturbauteil zur Verfügung gestellt, dass unmittelbar als Unterboden beispielsweise eines Kraftfahrzeugs eingesetzt werden kann, ohne dass nachträglich weitere Schichten auf das Strukturbauteil aufgebracht werden müssen.

Die Schichtstruktur kann als Deckschicht auch eine lackierte Metallschicht oder eine Dekorschicht aufweist, die mit mindestens einer Schicht der Schichtstruktur verbunden ist. Weiterhin kann die Schichtstruktur als Korrosionsschutz auch eine Kunststoffschicht als Deckschicht aufweisen oder von einer solchen umgeben sein.

Durch eine Anpassung der Anzahl und der Dicken der Aluminiumschichten und/oder der Faserschichten, des Fasermaterialanteils in den Faserschichten, der Art der Mikroperforation der Aluminiumschichten sowie der Wahl der äußeren Schichten (z.B. Teppich, akustisches Flies, dekorativ lackiertes Aluminium, etc.) können verschiedene Funktionalitäten des Strukturbauteils bedarfsgemäß eingestellt werden, insbesondere in Bezug auf das Gewicht, die Biege-, Torsions- und Drucksteifigkeit, das Crash-Verhalten, die Korrosionsstabilität, die akustische Wirksamkeit, die Wärmedämmung, das optische Erscheinungsbild und einen geringen c_{w}-Wert.

Das Strukturbauteil kann grundsätzlich als ebene Platte ausgebildet sein. Bevorzugt ist es jedoch dreidimensional verformt, beispielsweise um die Biegesteifigkeit des Bauteils in bestimmten Richtungen zu vergrößern, oder um die Form des Bauteils an die Umgebung (z. B. an die Karosserie eines Kraftfahrzeugs) anzupassen, in der das Bauteil eingesetzt werden soll. Zu diesem Zweck können die gestapelten Schichten unter Druck und ggf. Wärmeeinwirkung verpresst und in die gewünschte dreidimensionale Form gebracht werden.

Bei einer Ausführungsform des Verfahrens wird mindestens eine Faserschicht der Schichtstruktur in Form eines Faserkuchens im Formwerkzeug angeordnet, wobei der Faserkuchen anorganische Fasern und Fasern aus thermoplastischem Kunststoff umfasst. Beim Heißverpressen des Faserkuchens schmelzen die Fasern aus thermoplastischem Kunststoff zumindest teilweise oder im Wesentlichen vollständig auf und bilden eine Kunststofffschmelze. Beim Wiedererstarren der Kunststoffschmelze, beispielsweise während oder nach dem Heißverpressen des Faserkuchens, ergibt sich dann eine zusammenhängende Faserschicht. Die Fasern aus thermoplastischem Kunststoff dienen also als thermoplastisches Bindemittel, das sich beim Heißverpressen der Schicht erweicht und die anorganischen Fasern bindet. Auf diese Weise ergibt sich eine Schicht geringer Dichte, die jedoch eine große Stabilität aufweist.

Der Faserkuchen besteht vorzugsweise im Wesentlichen aus anorganischen Fasern und Fasern aus thermoplastischem Kunststoff, insbesondere zu mindestens 80 %, vorzugsweise zu mindestens 95 %. Beispielsweise kann der Faserkuchen ein Gemisch aus Polypropylenfasern und Glasfasern umfassen.

Der Faserkuchen kann beispielsweise dadurch bereitgestellt werden, dass zunächst ein Faserkuchen aus Fasern aus thermoplastischem Kunststoff bereitgestellt wird, auf den dann anorganische Fasern wie zum Beispiel Glasfasern aufgebracht werden. Die anorganischen Fasern können dann mit den Fasern aus thermoplastischem Kunststoff gemischt werden, beispielsweise durch mechanisches Einarbeiten der anorganischen Fasern in den Faserkuchen. Nach dem Mischen der Fasern aus thermoplastischem Kunststoff und der anorganischen Fasern kann der Faserkuchen optional homogenisiert und zu einem Vlies verarbeitet, beispielsweise verwoben werden. Ein solches Vlies kann beispielsweise eine Dicke von 50 bis 80 mm aufweisen. Das Homogenisieren des Faserkuchens kann insbesondere durch Walken und/oder Nadeln des Vlieses erfolgen.

Der Faserkuchen kann auch zunächst in einem separaten Werkzeug heißverpresst und dann als vorverpresste Faserschicht in dem Formwerkzeug angeordnet werden.

Bei einem weiteren Ausführungsbeispiel des Verfahrens wird das Strukturbauteil nach dem Heißpressen derart erwärmt, dass sich die Dicke mindestens einer Faserschicht zumindest abschnittsweise vergrößert.

In der Faserschicht liegt zumindest ein Teil der Fasern nicht vollständig gestreckt, sondern zumindest teilweise gekrümmt vor, so dass diese gekrümmten Fasern in der Faserschicht unter Spannung stehen. Beim Erwärmen nach dem Heißpressen erweicht ein Teil des thermoplastischen Bindemittels bzw. schmilzt auf, so dass sich die die gekrümmten Fasern neu ausrichten, wobei sich in der Faserschicht kleine Hohlräume bilden und sich auf diese Weise einerseits die Dicke der Faserschicht, als auch deren Porosität erhöht.

Derartige Faserschichten zeichnen sich einerseits durch gute Festigkeitseigenschaften bei relativ geringem Gewicht und andererseits durch gute akustische, insbesondere gute schallisolierende Eigenschaften aus. Weiterhin können die Eigenschaften solcher Faserschichten bei der Herstellung gezielt eingestellt werden, so dass auf diese Weise die für eine spezielle Anwendung gewünschten Materialeigenschaften eingestellt werden können.

Eine weitere Ausführungsform des Verfahrens ist dadurch gekennzeichnet, dass die Schichten der Schichtstruktur in unverpresstem Zustand in dem Formwerkzeug angeordnet werden, dass die Schichten in dem Formwerkzeug zu einem Strukturbauteil heißverpresst werden, wobei das Strukturbauteil bezogen auf die Zielgeometrie des Strukturbauteils zumindest bereichsweise eine geringere Dicke aufweist, dass das Formwerkzeug auf die Zielgeometrie des herzustellenden Strukturbauteils eingestellt wird und dass das Strukturbauteil im Formwerkzeug derart erwärmt wird, dass das Strukturbauteil durch zumindest abschnittsweise Erhöhung der Dicke mindestens einer Faserschicht die Zielgeometrie des Strukturbauteils einnimmt.

Auf diese Weise kann das Strukturbauteil in einem Prozesszyklus und in einem Formwerkzeug hergestellt werden, wodurch die Herstellung des Strukturbauteils vereinfacht und rationalisiert wird. Insbesondere können bei dieser Ausführungsform Werkzeuge zum Vorverpressen von Faserschichten eingespart werden.

Bei einer weiteren Ausführungsform des Verfahrens werden die Aluminiumschichten in Form von Blechen aus Aluminium oder einer Aluminiumlegierung in dem Formwerkzeug angeordnet. Die Aluminiumbleche können beispielsweise durch Walzen eines Aluminiumbands und Konfektionierung des Aluminiumbands zu Aluminiumblechen zur Verfügung gestellt werden. Bei einer Mehrzahl von Aluminiumschichten können die Schichten aus gleichen oder unterschiedlichen Aluminiumlegierungen bestehen. Weiterhin können die eine oder mehreren Aluminiumschichten in einer Presse vorkonfektioniert und/oder vorgeformt werden, insbesondere abhängig von der gewünschten Form des Strukturbauteils. Die eine oder mehreren Aluminiumschichten können dem Formwerkzeug, beispielsweise einer Doppelbandpresse, auch bandförmig zugeführt und dort angeordnet werden. Auf diese Weise ist auch eine bandförmige Herstellung der Strukturbauteile möglich.

Weitere Merkmale und Vorteile der vorliegenden Erfindung ergeben sich aus der nachfolgenden Beschreibung von Ausführungsbeispielen, wobei auf die beigefügte Zeichnung Bezug genommen wird.

In der Zeichnung zeigen
- Fig. 1a-d: ein Verfahren zur Herstellung eines Strukturbauteils aus dem Stand der Technik,
- Fig. 2: eine Tragwerkskonstruktion, wie sie für Strukturbauteile aus dem Stand der Technik verwendet wird,
- Fig. 3a-e: ein Ausführungsbeispiel des erfindungsgemäßen Verfahrens zur Herstellung eines Strukturbauteils,
- Fig. 4a-c: Aluminiumband bzw. -blech während der Durchführung des Verfahrens aus Fig. 3a-e,
- Fig. 5: ein Ausführungsbeispiel des erfindungsgemäßen Strukturbauteils,
- Fig. 6a-c: ein Aluminiumblech für weitere Ausführungsbeispiele des Verfahrens zur Herstellung eines Strukturbauteils bzw. des Strukturbauteils und
- Fig. 7a-c: ein weiteres Ausführungsbeispiel des Verfahrens zur Herstellung eines Strukturbauteils bzw. des Strukturbauteils.

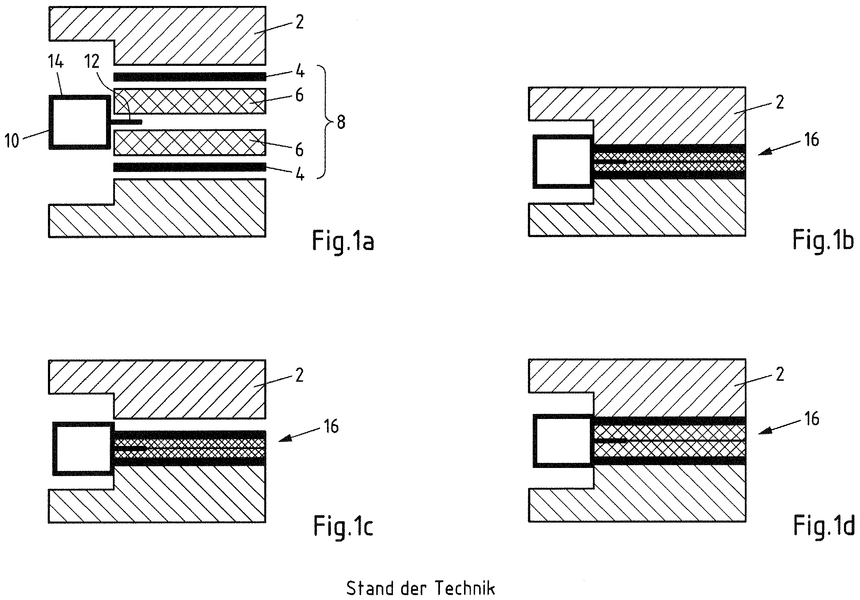

Fig. 1a-d zeigen ein Verfahren zur Herstellung eines Strukturbauteils aus dem Stand der Technik.

In dem in Fig. 1a dargestellten ersten Schritt werden in einem als Presse ausgebildeten Formwerkzeug 2 zwei Aluminiumschichten 4 aus einer Aluminiumlegierung sowie zwei Faserschichten 6 aus einem Fasermaterial und einem thermoplastischen Bindemittel in einer Stapelrichtung zu einer Schichtstruktur 8 übereinander angeordnet. Zudem wird ein Anschlusselement 10 derart angeordnet, dass ein laschenartiger Verankerungsbereich 12 des Anschlusselements 10 zwischen zwei in Stapelrichtung benachbarten Faserschichten 6 der Schichtstruktur 8 eingebettet ist. Das Anschlusselement 10 weist neben dem Verankerungsbereich 12 noch einen Anschlussbereich 14 auf, der die Form eines Hohlprofils aufweist und außerhalb der Schichtstruktur 8 angeordnet ist.

Bei diesem Ausführungsbeispiel liegen die Faserschichten 6 im ersten Schritt in Form eines Faserkuchens aus anorganischen Fasern wie z. B. Glasfasern und Fasern aus einem thermoplastischen Kunststoff wie z. B. Polypropylen vor. Die Fasern aus thermoplastischem Kunststoff nehmen hierbei die Funktion des thermoplastischen Bindemittels ein. Bei einem alternativen Ausführungsbeispiel können die Faserschichten 6 auch in Form von vorverpressten Faserkuchen in dem Formwerkzeug 2 angeordnet werden.

Die Aluminiumschichten 4 sind jeweils auf der der benachbarten Faserschicht 6 zugewandten Seite mit einer Haftvermittlerschicht versehen, um die Haftung zwischen der Aluminiumschicht 4 und der Faserschicht 6 zu verbessen. Ebenso ist das Anschlusselement 10 im Verankerungsbereich 12 mit einer Haftvermittlerschicht versehen, um die Haftung zwischen dem Anschlusselement 10 und den beiden umgebenden Faserschichten 6 zu erhöhen. Bei dem Haftvermittler kann es sich beispielsweise um einen PP- oder PE-Haftvermittler handeln.

In dem zweiten, in Fig. 1b dargestellten Verfahrensschritt werden die Schichten der Schichtstruktur 8 und der eingebettete Verankerungsbereich 12 des Anschlusselements 10 in dem Formwerkzeug 2 heißverpresst. Beim Heißverpressen wird die Temperatur in den Faserschichten 6 auf einen Wert oberhalb der Erweichungstemperatur der Fasern aus thermoplastischem Kunststoff erhöht, so dass diese zumindest teilweise aufschmelzen. Weiterhin presst das Formwerkzeug die Schichtstruktur 8 mit dem eingebetteten Verankerungsbereich 12 zusammen, so dass die einzelnen Schichten der Schichtstruktur 8 und der Verankerungsbereich 12 beim Erstarren des thermoplastischen Kunststoffs fest miteinander verbunden werden und ein mehrschichtiges Strukturbauteil 16 ergeben. Das Formwerkzeug 2 ist im Bereich des Anschlussbereichs 14 des Anschlusselements 10 derart ausgebildet, dass der Anschlussbereich nicht mitverpresst wird. Weiterhin ist das Formwerkzeug 2 in diesem Verfahrensschritt so eingerichtet, dass es die Schichtstruktur 8 auf eine Geometrie verpresst, die zumindest bereichsweise eine geringere Dicke aufweist als die Zielgeometrie für das Strukturbauteil 16.

In dem dritten, in Fig. 1c dargestellten Verfahrensschritt wird das Formwerkzeug nach dem Heißverpressen auf die Zielgeometrie des Strukturbauteils 16 eingestellt. Das Strukturbauteil 16 wird dann erneut auf einen Wert oberhalb der Erweichungstemperatur des thermoplastischen Kunststoffs der Faserschichten erwärmt. Durch diese Erwärmung schmilzt das thermoplastische Bindemittel in den Faserschichten 6 zumindest teilweise wieder auf, so dass sich die anorganischen Fasern in diesen Schichten neu ausrichten können. Hierbei entstehen Hohlräume in den Faserschichten 6, so dass sich die Faserschichten 6 in ihrer Dicke ausdehnen, bis sie wie in Fig. 1d dargestellt die durch das Formwerkzeug 2 vorgegebene Zielgeometrie eingenommen haben.

Bei der Ausdehnung der Faserschichten 6 erhöht sich gleichzeitig die Porosität dieser Schichten, so dass die spezifische Dichte des Strukturbauteils 16 reduziert wird. Das fertige Strukturbauteil 16 kann schließlich nach dem Wiedererstarren des thermoplastischen Kunststoffs in den Faserschichten 6 dem Formwerkzeug entnommen und bestimmungsgemäß verwendet werden.

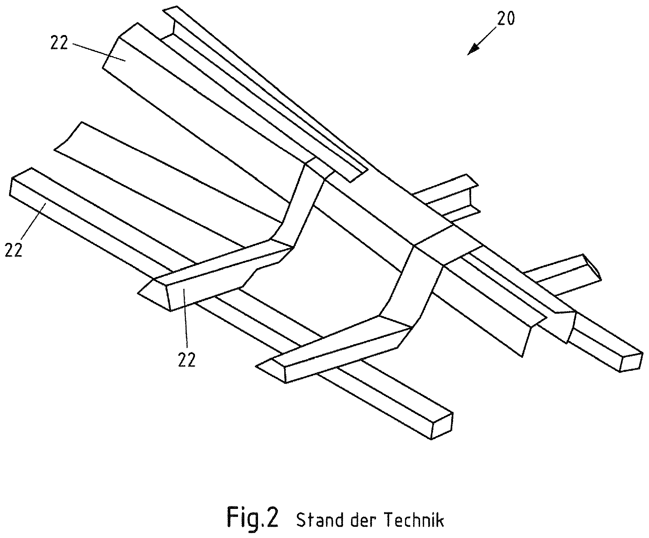

Um dem Strukturbauteil 16 aus dem Stand der Technik die nötige Steifigkeit zu verleihen, war es im Stand der Technik erforderlich, Tragwerkkonstruktionen in das Strukturbauteil 16 einzubetten bzw. mit dem Strukturbauteil zu verbinden. Fig. 2 zeigt eine solche Tragwerkkonstruktion 20 aus dem Stand der Technik, die mehrere miteinander verschweißte Profile 22 aufweist. Im Stand der Technik wurden solche Tragwerkkonstruktionen insbesondere in die Strukturbauteile 16 eingebettet, indem sie im oben beschriebenen und in Fig. 1a dargestellten ersten Verfahrensschritt zwischen zwei Faserschichten 6 in die Schichtstruktur 8 eingebettet wurden.

Neben dem erhöhten Aufwand durch das Verschweißen der Profile 22 zur Tragwerkkonstruktion 20 erforderte dieses Verfahren auch eine Einzelteil-Vorbehandlung (z.B. zur Verbesserung des Korrosionsschutzes) und eine Einzelteil-Vorbeschichtung der Tragwerkkonstruktion 20 mit Haftvermittler, um beim Verpressen eine ausreichende Verbindung mit den Faserschichten 6 zu gewährleisten.

Es wurde nun erkannt, dass ein einfacheres und kostengünstigeres Verfahren zur Herstellung von Strukturbauteilen mit hoher Steifigkeit dadurch erreicht werden kann, dass die Tragwerkkonstruktion 20 im Strukturbauteil 16 durch vorzugsweise vorlackierte, ggf. geklebte oder geschweißte, ein- oder mehrlagige Aluminiumblechformteile ersetzt wird.

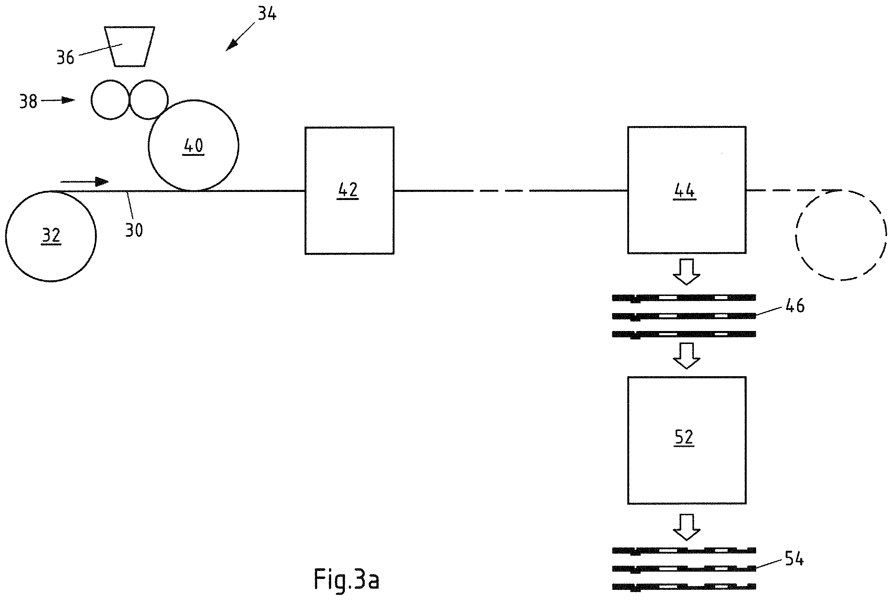

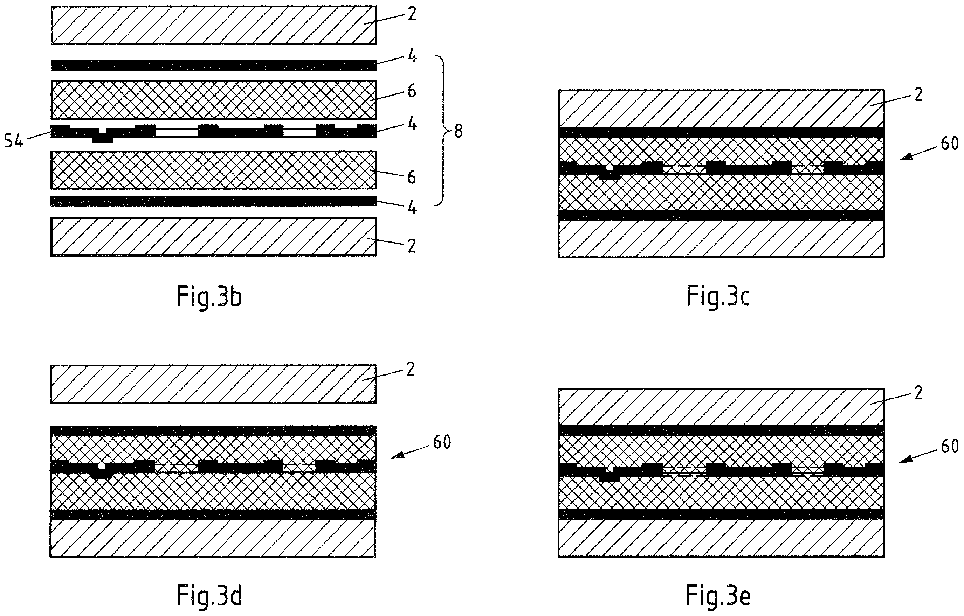

Fig. 3a-e zeigt nun ein Ausführungsbeispiel des erfindungsgemäßen Verfahrens zur Herstellung eines Strukturbauteils. Bei dem Verfahren wird zunächst ein Aluminiumband 30 von einem Coil 32 abgewickelt und mit einer Vorrichtung zur Bandbeschichtung 34 (Coil-Coating) beschichtet, wobei ein Haftvermittler, wie zum Beispiel ein PP-, PA- oder Polyester-Haftvermittler, aus einem Reservoir 36 über Dosierwalzen 38 und eine Auftragswalze 40 gleichmäßig auf die Bandoberfläche des Bands 30 aufgebracht wird. Anschließend wird die aufgetragene Haftvermittlerschicht in einem Trocknungskanal 42 getrocknet.

Fig. 3a zeigt eine einseitige Bandbeschichtung; es ist jedoch ebenso eine beidseitige Bandbeschichtung möglich.

Weiterhin kann vor der Bandbeschichtung auch eine Vorbehandlung des Aluminiumbands 30 erfolgen, beispielsweise durch Auftrag einer Korrosionsschutzschicht bzw. Passivierungsschicht.

Das beschichtete Band 30 wird dann, direkt oder auch nach zwischenzeitlichem Aufrollen zu und Wiederabrollen von einem Coil, einer Stanzvorrichtung 44 zugeführt, in der aus dem Band 30 Aluminiumstanzbleche 46 ausgestanzt werden. Alternativ kann das Band 30 auch erst zu einzelnen Aluminiumblechen abgelängt werden, die dann der Stanzvorrichtung 44 zugeführt werden, um daraus die Aluminiumstanzbleche 46 auszustanzen. Die Stanzabfälle können einem Recycling zugeführt, insbesondere wieder eingeschmolzen werden.

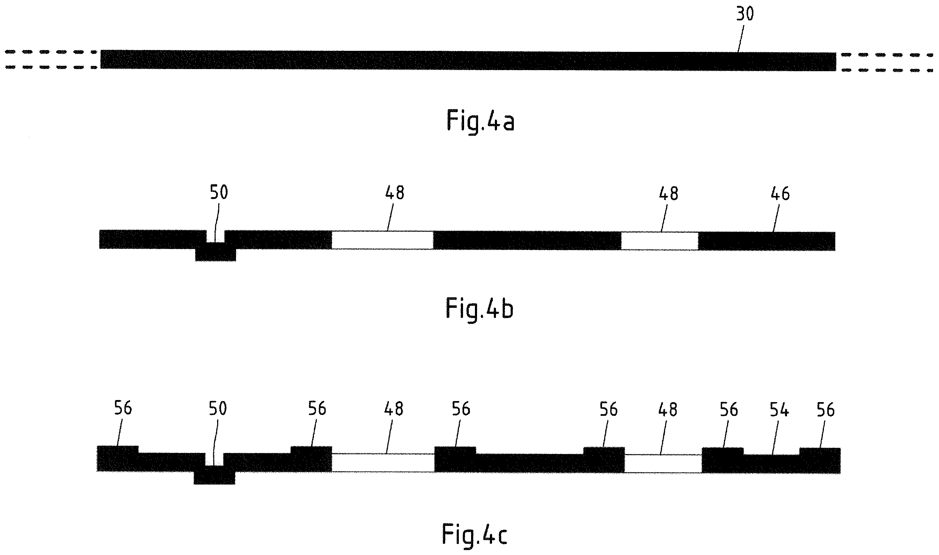

Fig. 4a zeigt das beschichtete Band 30 (oder alternativ Blech) vor dem Ausstanzen im Querschnitt. Fig. 4b zeigt das ausgestanzte Aluminiumstanzblech 46. Durch das Ausstanzen wird die Außengeometrie des Aluminiumstanzblechs 46 festgelegt. Darüber hinaus werden Ausnehmungen 48 und Versteifungssicken 50 in das Aluminiumstanzblechs 46 gestanzt. Die Ausnehmungen 48 dienen der Gewichtsersparnis und können an Stellen in das Aluminiumstanzblech 46 gestanzt werden, an denen beim Einsatzzweck des fertigen Strukturbauteils geringere Anforderungen an die Steifigkeit bestehen. Die Versteifungssicken 50 werden demgegenüber an Stellen in das Aluminiumstanzblech 46 gestanzt, an denen beim Einsatzzweck des fertigen Strukturbauteils höhere Anforderungen an die Steifigkeit bestehen. Auf diese Weise kann die Steifigkeit des herzustellenden Strukturbauteils bei gleichzeitiger Optimierung des Gewichts gezielt an die vorgesehenen Steifigkeitsanforderungen angepasst werden. Beispielsweise kann die Steifigkeit des fertigen Strukturbauteils durch die Versteifungssicken 50 gezielt an Krafteinleitungspunkten erhöht werden.

Nach dem Stanzen werden die Aluminiumstanzbleche 46 noch einer Bördelvorrichtung 52 zugeführt, in der Kanten des Aluminiumstanzblechs 46 gebördelt werden. Das gebördelte Aluminiumstanzblech 54 ist in Fig. 4c im Querschnitt dargestellt. Das gebördelte Aluminiumstanzblech 54 ist an den Außenrändern und an den Rändern der Ausnehmungen 48 gebördelt und zeigt entsprechende Bördelkanten 56, die in Fig. 4c schematisch als Verdickungen dargestellt sind.

Die beschichteten und gebördelten Aluminiumstanzbleche 54 können dann weiter zur Herstellung des Strukturbauteils eingesetzt werden.

Die weiteren in Fig. 3b bis 3e dargestellten Schritte des Herstellungsverfahrens ähneln den in Fig. 1a bis 1d dargestellten Schritten des zuvor beschriebenen Verfahrens aus dem Stand der Technik, auf deren Beschreibung hier verwiesen wird. Einander entsprechende Komponenten sind mit gleichen Bezugszeichen versehen.

In dem in Fig. 3b dargestellten Schritt werden in dem als Presse ausgebildeten Formwerkzeug 2 drei mit Haftvermittler beschichtete Aluminiumschichten 4 aus einer Aluminiumlegierung sowie zwei Faserschichten 6 aus einem Fasermaterial und einem thermoplastischen Bindemittel in einer Stapelrichtung zu einer Schichtstruktur 8 übereinander angeordnet. Die mittlere Aluminiumschicht wird durch das zuvor hergestellte beschichtete und gebördelte Aluminiumstanzblech 54 gebildet. Alternativ können auch für die äußeren Aluminiumschichten gebördelte Aluminiumstanzbleche 54 verwendet werden. Es sind auch eine andere Anzahl an Aluminiumschichten bzw. eine andere Anzahl an Faserschichten möglich.

In Fig. 1a wurde zusätzlich ein Anschlusselements 10 in die Schichtstruktur 8 eingebettet. Dieses ist in Fig. 3b nicht vorgesehen, kann alternativ aber ebenso bei dem in Fig. 3a-e beschriebenen Verfahren in die Schichtstruktur 8 eingebettet werden.

In dem in Fig. 3c dargestellten Schritt werden die Schichten der Schichtstruktur 8 analog zu Fig. 1b zu einem Strukturbauteil 60 heißverpresst. Das Formwerkzeug 2 ist in diesem Verfahrensschritt so eingerichtet, dass es die Schichtstruktur 8 auf eine Geometrie verpresst, die zumindest bereichsweise eine geringere Dicke aufweist als die Zielgeometrie für das Strukturbauteil 60.

In dem in Fig. 3d dargestellten Verfahrensschritt wird das Formwerkzeug 2 nach dem Heißverpressen auf die Zielgeometrie des Strukturbauteils 60 eingestellt und das Strukturbauteil 60 wird erneut auf einen Wert oberhalb der Erweichungstemperatur des thermoplastischen Kunststoffs der Faserschichten erwärmt, so dass sich die Faserschichten 6 wie für Fig. 1c beschrieben vergrößern, bis sie wie in Fig. 3d dargestellt die durch das Formwerkzeug 2 vorgegebene Zielgeometrie eingenommen haben.

Das fertige Strukturbauteil 60 kann schließlich nach dem Wiedererstarren des thermoplastischen Kunststoffs in den Faserschichten 6 dem Formwerkzeug entnommen und bestimmungsgemäß verwendet werden.

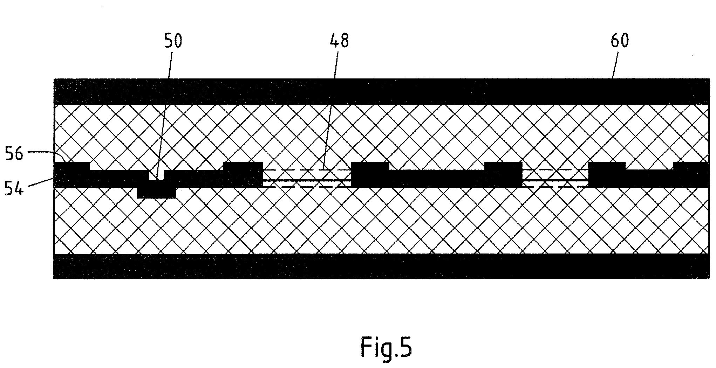

Fig. 5 zeigt das fertige Strukturbauteil 60 im Querschnitt. Durch das Heißverpressen sind die einzelnen Schichten des Strukturbauteils 60 fest miteinander verbunden. Weiterhin sorgen die Haftvermittlerschichten für einen festen Verbund.

In den Bereichen der Versteifungssicken 50 und die Bördelkanten 56 zeigt das Strukturbauteil 60 gute Werte für die Biege-, Torsions- und Drucksteifigkeit. Durch die Ausnehmungen 48 in den Bereichen mit geringeren Anforderungen an die Steifigkeit wird zudem eine Gewichtsersparnis erreicht.

Das anhand der Fig. 3a-e beschriebene Verfahren zur Herstellung des Strukturbauteils 60 erfordert keine aufwändige Herstellung von Tragwerkkonstruktionen und keine aufwändige Einzelteilbeschichtung. Stattdessen werden einfach, schnell und kostengünstig durchführbare Verfahrensschritte wie die Bandbeschichtung und das Ausstanzen und Umformen (insb. Bördeln) eingesetzt. Dadurch kann das Strukturbauteil 60 einfach und kostengünstig bei gleichzeitig guter Steifigkeit und geringem Gewicht hergestellt werden.

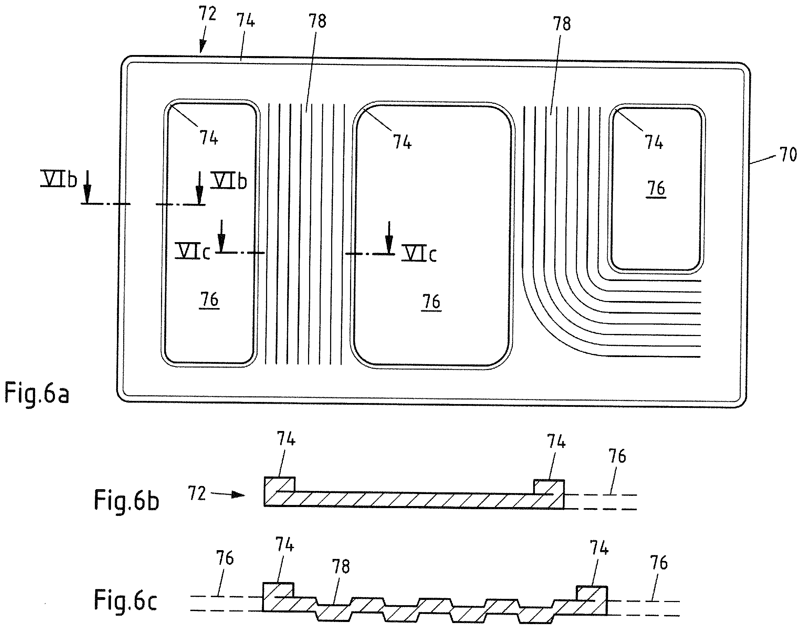

Fig. 6a-c zeigen ein Ausführungsbeispiel für ein im zuvor anhand der Fig. 3a beschriebenen Verfahrensschritt herstellbares gebördeltes Aluminiumstanzblech 70. Fig. 6a zeigt eine Aufsicht und die Fig. 6b-c zeigen zwei Teilquerschnitte entlang der in Fig. 6a mit VIb bzw. VIc eingezeichneten Schnittlinien.

Das gebördelte Aluminiumstanzblech 70 weist eine gebördelte Außenkontur 72 mit Bördelkanten 74 auf, durch die die Steifigkeit im Randbereich erhöht ist. Weiterhin weist das Aluminiumstanzblech 70 verschiedene Ausnehmungen 76 auf, die der Gewichtsersparnis dienen. Die Ränder der Ausnehmungen 76 sind zur Erhöhung der Steifigkeit ebenfalls gebördelt und weisen entsprechende Bördelkanten 74 auf. Weiterhin sind in das Aluminiumstanzblech 70 Versteifungssicken 78 eingestanzt, die ebenfalls eine Erhöhung der Steifigkeit in den entsprechenden Bereichen bewirken. Anzahl, Größe und Verlauf der Versteifungssicken 78 sind vorzugsweise an das Steifigkeitsanforderungsprofil für das Aluminiumstanzblech 70 im daraus herzustellenden Strukturbauteil angepasst.

Das gebördelte Aluminiumstanzblech 70 kann zur Herstellung eines Strukturbauteils 60 dann in den in Fig. 3b-e dargestellten Schritten anstelle des gebördelten Aluminiumstanzblechs 54 oder für eine andere Aluminiumschicht 4 eingesetzt werden.

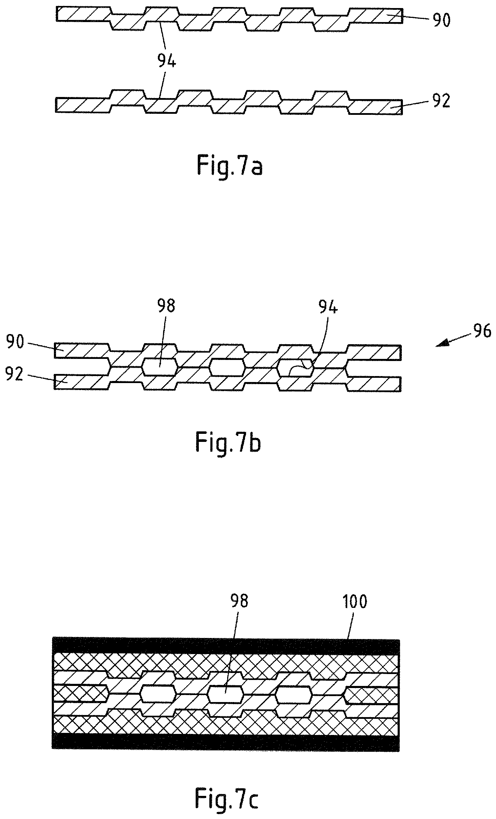

Die Fig. 7a-c zeigen ein Beispiel eines Verfahrens zur Herstellung eines Strukturbauteils, das zur Erfindung nicht gehört.

In einem ersten Schritt werden zwei Aluminiumstanzbleche 90, 92 mit jeweiligen Versteifungssicken 94 hergestellt, beispielsweise mit einem Verfahrensschritt analog zu Fig. 3a.

Die beiden Aluminiumstanzbleche 90, 92 werden dann so zu einer zweilagigen Aluminiumblechstruktur 96 verklebt oder verschweißt, dass zwischen den Aluminiumstanzblechen 90, 92 Hohlräume 98 entstehen. Insbesondere bewirken die Versteifungssicken 94 eine (mehrfache) halbschalenförmige Geometrie der Aluminiumstanzbleche 90, 92, so dass sich durch das Zusammenfügen der Bleche entsprechende Hohlräume 98 bilden.

Die zweilagige Aluminiumblechstruktur 96 kann dann weiter zur Herstellung eines Strukturbauteils in den in Fig. 3b-e dargestellten Schritten anstelle des gebördelten Aluminiumstanzblechs 54 oder für eine andere Aluminiumschicht 4 eingesetzt werden. Fig. 7c zeigt ein entsprechend hergestelltes Strukturbauteil 100. Die Hohlräume 98 in der Aluminiumblechstruktur 96 führen zu einer Steifigkeitserhöhung.

Die Hohlräume 98 sind vorzugsweise kanalförmig ausgebildet und verlaufen zwischen zwei Öffnungen des Strukturbauteils 100. Auf diese Weise wird ein Kanal bereitgestellt, der dazu dienen kann, eine Energie-, Medien- oder Signalleitung zu führen.

Mit dem zuvor beschriebenen Verfahren kann ein steifigkeitsoptimiertes multifunktionales Verbundbauteil hergestellt werden, dass ggf. sogar zur Kabelführung genutzt werden kann.

## Patentansprüche

1. Mehrschichtiges Strukturbauteil (60,100)
- mit einer Schichtstruktur (8) umfassend eine Mehrzahl von in einer Stapelrichtung übereinander angeordneter Schichten (4, 6),
- wobei die Schichtstruktur (8) mindestens eine Faserschicht (6) aus einem Fasermaterial und einem thermoplastischen Bindemittel und mindestens eine Aluminiumschicht (4) aus Aluminium oder einer Aluminiumlegierung umfasst,
**dadurch gekennzeichnet, dass**
- mindestens eine Aluminiumschicht (4) der Schichtstruktur (8) eine Versteifungsstruktur (50, 78, 94; 56, 74; 98) aufweist, wobei die Versteifungsstruktur als Bördelkante (56, 74) ausgebildet ist.

2. Strukturbauteil nach Anspruch 1,
**dadurch gekennzeichnet,**
**dass** die Aluminiumschicht (4) der Schichtstruktur (8) eine Ausnehmung (48, 76) aufweist.

3. Strukturbauteil nach Anspruch 1 oder 2,
**dadurch gekennzeichnet,**
**dass** die Versteifungsstruktur weiter als Versteifungssicke (50, 78. 94) oder Hohlraum (98) ausgebildet ist.

4. Strukturbauteil nach einem der Ansprüche 1 bis 3,
**dadurch gekennzeichnet,**
**dass** die Versteifungsstruktur (50, 78, 94; 56, 74; 98), insbesondere die Bördelkante (56, 74), die Versteifungssicke (50, 78) oder der Hohlraum (98), bzw. die Ausnehmung (48, 76) der Aluminiumschicht (4) zwischen zwei Faserschichten (6) eingebettet ist.

5. Strukturbauteil nach einem der Ansprüche 1 bis 4,
**dadurch gekennzeichnet,**
**dass** die die Versteifungsstruktur (50, 78, 94; 56, 74; 98), insbesondere die Bördelkante (56, 74) oder die Versteifungssicke (50, 78), aufweisende Aluminiumschicht (4) bzw. die die Ausnehmung (48, 76) aufweisende Aluminiumschicht (4), ein gestanztes und/oder umgeformtes Aluminiumblech (46, 54, 70, 90, 92) aufweist.

6. Strukturbauteil nach einem der Ansprüche 3 bis 5,
**dadurch gekennzeichnet,**
**dass** die den Hohlraum (98) aufweisende Aluminiumschicht (4) zwei übereinander angeordnete, gefügte Aluminiumbleche (46, 54, 70, 90, 92) aufweist, zwischen denen der Hohlraum (98) gebildet ist.

7. Strukturbauteil nach einem der Ansprüche 3 bis 6,
**dadurch gekennzeichnet,**
**dass** der Hohlraum (98) der Aluminiumschicht (4) zwischen zwei Öffnungen verläuft, so dass eine Leitung durch den Hohlraum (98) hindurchführbar ist, insbesondere eine Energie-, Medien- oder Signalleitung.

8. Strukturbauteil nach einem der Ansprüche 1 bis 7,
**dadurch gekennzeichnet, dass** die die Versteifungsstruktur (50, 78, 94; 56, 74; 98) bzw. die Ausnehmung (48, 87) aufweisende Aluminiumschicht (4) eine Dicke im Bereich von 200 bis 2000 µm aufweist.

9. Strukturbauteil nach einem der Ansprüche 1 bis 8,
**dadurch gekennzeichnet, dass**
das Strukturbauteil (60,100) ein Anschlusselement (10) aus Metall umfasst,
wobei das Anschlusselement (10) einen Verankerungsbereich (12) aufweist, der zwischen zwei in Stapelrichtung benachbarten Schichten der Schichtstruktur (8) eingebettet ist, insbesondere zwischen zwei Faserschichten (6), und wobei das Anschlusselement (10) einen zumindest teilweise außerhalb der Schichtstruktur (8) angeordneten Anschlussbereich (14) zum Verbinden des Strukturbauteils (60, 100) mit einem weiteren Bauteil aufweist.

10. Strukturbauteil nach einem der Ansprüche 1 bis 9,
**dadurch gekennzeichnet,**
**dass** die mindestens eine Aluminiumschicht (4) der Schichtstruktur (8) mit einer Haftvermittlerschicht versehen sind, insbesondere mit einem PP-, PA- oder Polyester-Haftvermittler.

11. Strukturbauteil nach einem der Ansprüche 1 bis 10,
**dadurch gekennzeichnet,**
**dass** die mindestens eine Faserschicht (6) jeweils wenigstens abschnittsweise eine Porosität von wenigstens 75 % aufweist.

12. Verfahren zur Herstellung eines Strukturbauteils (60, 100) nach einem der Ansprüche 1 bis 11,
- bei dem die Schichten (4, 6) der Schichtstruktur (8) in einem Formwerkzeug (2) in Stapelrichtung übereinander angeordnet werden und
- bei dem die Schichten (4, 6) zu einem Strukturbauteil (60, 100) heißverpresst werden.

13. Verfahren nach Anspruch 12,
- bei dem für eine Aluminiumschicht (4) der Schichtstruktur (8) ein Aluminiumblech (46, 54, 70, 90, 92) mit einer Versteifungsstruktur (50, 78, 94; 56, 74; 98), insbesondere der Bördelkante (56, 74) oder einer Versteifungssicke (50, 78, 94), und/oder mit einer Ausnehmung (48, 76) in dem Formwerkzeug (2) angeordnet wird.

14. Verfahren nach Anspruch 12 oder 13,
- bei dem für eine Aluminiumschicht (4) der Schichtstruktur (8) zwei übereinander angeordnete, gefügte Aluminiumbleche (90, 92) in dem Formwerkzeug angeordnet werden, wobei zwischen den beiden Aluminiumblechen (90, 92) ein Hohlraum (98) gebildet ist.

15. Verfahren nach Anspruch 13 oder 14,
- bei dem das Aluminiumblech bzw. die Aluminiumbleche (46, 54, 70, 90, 92) für die Aluminiumschicht (4) durch Stanzen und/oder Umformen eines Aluminiumblechs oder Aluminiumbands (30), insbesondere eines beschichteten Aluminiumblechs oder Aluminiumbands (30), hergestellt werden.

16. Verfahren nach einem der Ansprüche 12 bis 15,
**dadurch gekennzeichnet,**
**dass** mindestens eine Faserschicht (6) der Schichtstruktur (8) in Form eines Faserkuchens im Formwerkzeug (2) angeordnet wird, wobei der Faserkuchen anorganische Fasern und Fasern aus thermoplastischem Kunststoff umfasst.

17. Verfahren nach einem der Ansprüche 12 bis 16,
**dadurch gekennzeichnet,**
**dass** das Strukturbauteil (60,100) nach dem Heißpressen derart erwärmt wird, dass sich die Dicke mindestens einer Faserschicht (6) zumindest abschnittsweise vergrößert.

18. Verfahren nach einem der Ansprüche 12 bis 17,
**dadurch gekennzeichnet,**
- **dass** die Schichten der Schichtstruktur (8) in unverpresstem Zustand in dem Formwerkzeug (2) angeordnet werden,
- **dass** die Schichten in dem Formwerkzeug (2) zu einem Strukturbauteil (60,100) heißverpresst werden, wobei das Strukturbauteil (60, 100) bezogen auf die Zielgeometrie des Strukturbauteils (60, 100) zumindest bereichsweise eine geringere Dicke aufweist,
- **dass** das Formwerkzeug (2) auf die Zielgeometrie des herzustellenden Strukturbauteils (60,100) eingestellt wird und
- **dass** das Strukturbauteil (60, 100) im Formwerkzeug (2) derart erwärmt wird, dass das Strukturbauteil (60, 100) durch zumindest abschnittsweise Erhöhung der Dicke mindestens einer Faserschicht (6) die Zielgeometrie des Strukturbauteils (60,100) einnimmt.

19. Verwendung eines Strukturbauteils (60, 100) nach einem der Ansprüche 1 bis 11 als Bauelement im Automobilbau, im Schienenfahrzeugbau, im Schiffsbau, im Maschinenbau, im Flugzeugbau oder im Baubereich.

## Claims

1. A multi-layer structural component (60, 100)
- with a layer structure (8) comprising a plurality of layers (4, 6) arranged on top of one another in a stacking direction,
- the layer structure (8) comprising at least one fibre layer (6) of a fibre material and of a thermoplastic binder, and at least one aluminium layer (4) of aluminium or of an aluminium alloy,
**characterised in that**
- at least one aluminium layer (4) of the layer structure (8) has a reinforcing structure (50, 78, 94; 56, 74, 98)wherein the reinforcing structure is formed as a flanged edge (56, 74).

2. Structural component according to Claim 1,
**characterised in that**
the aluminium layer (4) of the layer structure (8) has a cutout (48,76).

3. Structural component according to Claim 1 or 2,
**characterised in that**
the reinforcing structure is further formed as a reinforcing bead (50, 78, 94) or as a cavity (98).

4. Structural component according to any one of Claims 1 to 3,
**characterised in that**
the reinforcing structure (50, 78, 94; 56, 74, 98), in particular the flanged edge (56, 74), the reinforcing bead (50, 78) or the cavity (98), or respectively the cutout (48, 76) of the aluminium layer (4) is embedded between two fibre layers (6).

5. Structural component according to any one of Claims 1 to 4,
**characterised in that**
the aluminium layer (4) having the reinforcing structure (50, 78, 94; 56, 74, 98), in particular the flanged edge (56, 74) or the reinforcing bead (50, 78), or respectively the aluminium layer (4) having the cutout (48, 76) comprises a punched and/or formed aluminium sheet (46, 54, 70, 90, 92).

6. Structural component according to any one of Claims 3 to 5,
**characterised in that**
the aluminium layer (4) having the cavity (98) comprises two superimposed, joined aluminium sheets (46, 54, 70, 90, 92), between which the cavity (98) is formed.

7. Structural component according to any one of Claims 3 to 6, **characterised in that**
the cavity (98) in the aluminium layer (4) runs between two openings, so that a line can be guided through the cavity (98), in particular an energy, media or signal line.

8. Structural component according to any one of Claims 1 to 7,
**characterised in that**
the aluminium layer (4) having the reinforcing structure (50, 78, 94; 56, 74, 98) or respectively the cutout (48, 87) has a thickness in a range of from 200 to 2000 µm.

9. Structural component according to any one of Claims 1 to 8,
**characterised in that**
the structural component (60,100) comprises a connection element (10) of metal, wherein the connection element (10) comprises an anchoring region (12) which is embedded between two layers of the layer structure (8) which are adjacent in the stacking direction, in particular two fibre layers (6), and wherein the connection element (10) comprises a connection region (14) which is at least partly arranged outside the layer structure (8), to join the structural component (60, 100) to a further component.

10. Structural component according to any one of Claims 1 to 9,
**characterised in that**
the at least one aluminium layer (4) of the layer structure (8) is provided with an adhesion promoting layer, in particular with a PP, PA or polyester adhesion promoter.

11. Structural component according to any one of Claims 1 to 10,
**characterised in that**
the at least one fibre layer (6) at least in some sections has respectively a porosity of at least 75 %.

12. Method for producing a structural component (60, 100) according to any one of Claims 1 to 11, wherein
- the layers (4, 6) of the layer structure (8) are arranged one on top of another in a stacking direction in a forming tool (2), and
- the layers (4, 6) are hot pressed to form a structural component (60, 100).

13. Method according to Claim 12,
- wherein for an aluminium layer (4) of the layer structure (8), an aluminium sheet (46, 54, 70, 90, 92) having a reinforcing structure (50, 78, 94; 56, 74, 98), in particular the flanged edge (56, 74) or a reinforcing bead (50, 78, 94), and/or having a cutout (48, 76) is arranged in the forming tool (2).

14. Method according to Claim 12 or 13,
- wherein for an aluminium layer (4) of the layer structure (8), two superimposed, joined aluminium sheets (90, 92) are arranged in the forming tool, a cavity (98) being formed between the two aluminium sheets (90, 92).

15. Method according to Claim 13 or 14,
- wherein the aluminium sheet or respectively aluminium sheets (46, 54, 70, 90, 92) for the aluminium layer (4) are produced by punching and/or forming an aluminium sheet or aluminium strip (30), in particular a coated aluminium sheet or aluminium strip (30).

16. Method according to any one of Claims 12 to 15,
**characterised in that**
at least one fibre layer (6) of the layer structure (8) is arranged in the forming tool (2) as a fibre mat, wherein the fibre mat comprises inorganic fibres and fibres of thermoplastic.

17. Method according to any one of Claims 12 to 16,
**characterised in that**
after being hot-pressed, the structural component (60,100) is heated such that the thickness of at least one fibre layer (6) increases at least in some sections.

18. Method according to any one of Claims 12 to 17,
**characterised in that**
- the layers of the layer structure (8) are arranged in the forming tool (2) in an unpressed state,
- the layers in the forming tool (2) are hot-pressed to form a structural component (60, 100), wherein the structural component (60,100) has a relatively small thickness at least in some sections relative to the intended shape of the structural component (60, 100),
- the forming tool (2) is adjusted to the intended shape of the structural component (60,100) to be produced, and
- the structural component (60, 100) is heated in the forming tool (2) such that the structural component (60, 100) adapts the intended shape of the structural component (60, 100) by increasing the thickness of at least one fibre layer (6) at least in some sections.

19. Use of a structural component (60, 100) according to any one of Claims 1 to 11 as a construction element in automobile manufacture, rail vehicle construction, shipbuilding, mechanical engineering, aircraft construction or in the building sector.

## Revendications

1. Composant structural multicouche (60,100)
- présentant une structure en couches (8) qui comprend une pluralité de couches (4, 6) agencées les unes au-dessus des autres dans un sens d'empilement,
- la structure en couches (8) comprenant au moins une couche fibreuse (6) composée d'un matériau fibreux et d'un liant thermoplastique et au moins une couche d'aluminium (4) composée d'aluminium ou d'un alliage d'aluminium,
**caractérisé en ce que**
- au moins une couche d'aluminium (4) de la structure en couches (8) présente une structure de renforcement (50, 78, 94; 56, 74 ; 98), la structure de renforcement étant conçue en tant qu'arête de bordage (56, 74).

2. Composant structural selon la revendication 1, **caractérisé en ce que** la couche d'aluminium (4) de la structure en couches (8) présente un évidement (48, 76).

3. Composant structural selon la revendication 1 ou 2, **caractérisé en ce que** la structure de renforcement est conçue en outre en tant que nervure de renforcement (50, 78, 94) ou cavité (98).

4. Composant structural selon l'une des revendications 1 à 3, **caractérisé en ce que** la structure de renforcement (50, 78, 94 ; 56, 74 ; 98), notamment l'arête de bordure (56, 74), la nervure de renforcement (50, 78) ou la cavité (98), ou l'évidement (48, 76) de la couche d'aluminium (4), est intégrée entre deux couches fibreuses (6).

5. Composant structural selon l'une des revendications 1 à 4, **caractérisé en ce que** la couche d'aluminium (4) présentant la structure de renforcement (50, 78, 94 ; 56, 74 ; 98), notamment l'arête de bordure (56, 74) ou la nervure de renforcement (50, 78), ou la couche d'aluminium (4) présentant l'évidement (48, 76) présente une tôle d'aluminium (46, 54, 70, 90, 92) estampée et/ou façonnée.

6. Composant structural selon l'une des revendications 3 à 5, **caractérisé en ce que** la couche d'aluminium (4) présentant la cavité (98) présente deux tôles d'aluminium (46, 54, 70, 90, 92) jointes agencées l'une au-dessus de l'autre entre lesquelles est formée la cavité (98).

7. Composant structural selon l'une des revendications 3 à 6, **caractérisé en ce que** la cavité (98) de la couche d'aluminium (4) passe entre deux ouvertures, de sorte qu'une conduite est susceptible d'être introduite à travers la cavité (98), notamment une conduite d'énergie, conduite de fluide ou conduite de signaux.

8. Composant structural selon l'une des revendications 1 à 7, **caractérisé en ce que** la couche d'aluminium (4) présentant la structure de renforcement (50, 78, 94 ; 56, 74 ; 98) ou l'évidement (48, 87) présente une épaisseur dans une plage de 200 à 2000 µm.

9. Composant structural selon l'une des revendications 1 à 8, **caractérisé en ce que** le composant structural (60, 100) comporte un élément de raccordement (10) en métal, l'élément de raccordement (10) présentant une zone d'ancrage (12) qui est intégrée entre deux couches adjacentes de la structure en couches (8) dans le sens d'empilement, notamment entre deux couches fibreuses (6), et l'élément de raccordement (10) présentant une zone de raccordement (14) agencée au moins partiellement hors de la structure en couches (8) pour relier le composant structural (60,100) à un autre composant.

10. Composant structural selon l'une des revendications 1 à 9, **caractérisé en ce qu'**au moins une couche d'aluminium (4) de la structure en couches (8) est pourvue d'une couche d'agent favorisant l'adhésion, notamment d'un agent d'adhésion en polyester, PP ou PA.

11. Composant structural selon l'une des revendications 1 à 10, **caractérisé en ce qu'**au moins une couche fibreuse (6) présente respectivement au moins dans certaines portions une porosité d'au moins 75 %.

12. Procédé de fabrication d'un composant structural (60,100) selon l'une des revendications 1 à 11,
- dans lequel les couches (4, 6) de la structure en couches (8) sont agencées les unes au-dessus des autres dans un outil de formage. (2) dans le sens de l'empilement et
- dans lequel les couches (4, 6) sont pressées à chaud en un composant structural (60, 100).

13. Procédé selon la revendication 12,
dans lequel, pour une couche en aluminium (4) de la structure en couche (8), une tôle d'aluminium (46, 54, 70, 90, 92) avec une structure de renforcement (50, 78, 94 ; 56, 74 ; 98), notamment une arête de bordure (56, 74) ou une nervure de renforcement (50, 78, 94), et/ou avec un évidement (48, 76) est agencée dans l'outil de formage (2).

14. Procédé selon la revendication 12 ou 13,
dans lequel, pour une couche en aluminium (4) de la structure en couches (8), deux tôles d'aluminium (90, 92) jointes agencées l'une au-dessus de l'autre sont agencées dans l'outil de formage, une cavité (98) étant formée entre les deux tôles d'aluminium (90, 92).

15. Procédé selon la revendication 13 ou 14,
dans lequel la tôle d'aluminium ou les tôles d'aluminium (46, 54, 70, 90, 92) pour la couche d'aluminium (4) sont fabriquées par estampage et/ou façonnage d'une tôle d'aluminium ou d'une bande d'aluminium (30), notamment une tôle d'aluminium ou une bande d'aluminium (30) revêtue.

16. Procédé selon l'une des revendications 12 à 15,
**caractérisé en ce qu'**au moins une couche fibreuse (6) de la structure en couches (8) sous forme de gâteau de fibres est agencée dans l'outil de formage (2), le gâteau de fibres comportant des fibres inorganiques et des fibres en matière thermoplastique.

17. Procédé selon l'une des revendications 12 à 16,
**caractérisé en ce que** le composant structural (60,100) est réchauffé après le pressage à chaud de sorte que l'épaisseur d'au moins une couche fibreuse (6) augmente au moins dans certaines portions.

18. Procédé selon l'une des revendications 12 à 17, **caractérisé en ce que**
- les couches de la structure en couches (8) sont agencées à l'état non pressé dans l'outil de formage (2),
- **en ce que** les couches dans l'outil de formage (2) sont pressées à chaud en un composant structural (60, 100), le composant structural (60, 100), en ce qui concerne la géométrie cible du composant structural (60, 100), présentant au moins par secteur une épaisseur inférieure,
- **en ce que** l'outil de formage (2) est réglé sur la géométrie cible du composant structural à fabriquer (60,100) et
- **en ce que** le composant structural (60,100) dans l'outil de formage (2) est réchauffé de sorte que le composant structural (60,100) adopte, par une augmentation au moins dans certaines portions de l'épaisseur d'au moins une couche fibreuse (6), la géométrie cible du composant structural (60, 100).

19. Utilisation d'un composant structural (60, 100) selon l'une des revendications 1 à 11 en tant qu'élément de construction dans la construction automobile, dans la construction de véhicules ferroviaires, dans la construction navale, dans la construction mécanique, dans la construction aéronautique ou dans le secteur du bâtiment.
